# EUROPEAN PATENT SPECIFICATION

(11) **EP 4 601 088 B1**
(45) Date of publication and mention of the grant of the patent: **17.06.2026**
(21) Application number: 24190945.6
(22) Date of filing: 25.07.2024
(51) Int. Cl.: H01M 50/209, H01M 50/244, H01M 50/249, H01M 50/262, H01M 50/264, H01M 50/271, H01M 50/24, H01M 50/204

(54) **BATTERY BOX AND BATTERY PACK APPLYING THE SAME**
BATTERIEKASTEN UND BATTERIEPACK DAMIT
BOÎTIER DE BATTERIE ET BLOC-BATTERIE L'APPLIQUANT

(30) Priority: 06.02.2024 CN 202420287102 U
(43) Date of publication of application: 13.08.2025
(73) Proprietor: Eve Energy Co., Ltd., Huizhou, Guangdong 516006 (CN)
(72) Inventor: Zhang, Jun, Huizhou, Guangdong 516006 (CN)
(74) Representative: Petraz, Gilberto Luigi

(56) References cited:
- CN-A- 115 986 289
- CN-U- 217 823 118
- CN-U- 219 350 466

## Description

### Field

The present invention relates to the technical field of batteries and, particularly, to a battery box and a battery pack applying the same.

### Background

Most of the battery packs currently on the market adopt a battery box that only allows for a single deck of cells to be set up. As the electric vehicle evolves, the demand for energy density of the battery packs is getting increasingly high, and the existing single deck structure is no longer able to meet the market demand.

### Summary

Most of the current battery pack boxes only allow a single deck of cells to be set up, and the space utilization inside the battery pack is insufficient.

CN 219350466 U discloses a battery pack box with double deck.

Provided in a first aspect of the present invention, as recited in claim 1, is a battery box, including:
a bottom plate, in which a top surface of the bottom plate is provided with a first protrusion;
lateral plates, in which the lateral plates are provided perpendicular to the bottom plate on two opposite edges of the bottom plate, an interior side of the lateral plate is arranged with a first snap-block and a second snap-block along an extension direction thereof, and the first snap-block is closer to the bottom plate than the second snap-block;
a lower support, in which two opposite ends of the lower support are provided on the first snap-block respectively, a bottom of the lower support is abutted against a first protrusion, and a top of the lower support is arranged for placing cells;
a partition, in which two opposite ends of the partition are fixedly connected to the second snap-block respectively, and a top of the partition is provided with a second protrusion; and
an upper support, in which two opposite ends of the upper support are provided on the second snap-block respectively, a bottom of the upper support is abutted against the second protrusion, and a top of the upper support is arranged for placing cells.

Provided in a second aspect of the present invention is a battery pack, including:
a battery box as mentioned above;
one or more first cells, in which the first cell is provided on a top surface of the lower support; and
one or more second cells, in which the second cell is provided on a top surface of the upper support.

In the battery box of the present invention, specific configurations are as follows. A top surface of the bottom plate is provided with a first protrusion, the lateral plates are provided perpendicular to the bottom plate on two opposite edges of the bottom plate, an interior side of the lateral plate is arranged with a first snap-block and a second snap-block along an extension direction thereof, the first snap-block is closer to the bottom plate than the second snap-block, two opposite ends of the lower support are provided on the first snap-block respectively, a bottom of the lower support is abutted against a first protrusion, a top of the lower support is arranged for placing cells, two opposite ends of the partition are fixedly connected to the second snap-block respectively, a top of the partition is provided with a second protrusion, two opposite ends of the upper support are provided on the second snap-block respectively, a bottom of the upper support is abutted against the second protrusion, and a top of the upper support is arranged for placing cells. Therefore, a double-deck structure is formed to achieve an arrangement of double deck of cells, which greatly improves the space utilization inside the battery pack, enhances the structural strength of the double-deck structure, and ensures the stability of the arrangement of the double deck of cells.

### Brief description of the drawings

Fig. 1 is a diagram in a perspective view of the battery box in an embodiment;
Fig. 2 is a diagram in a section view of the battery box in an embodiment;
Fig. 3 is a diagram in a section view of the battery pack in an embodiment.

The meanings of the attached markings are as follows:
1 bottom plate; 11 first protrusion; 2 lateral plate; 21 first snap-block; 211 tab; 22 second snap-block; 3 lower support; 4 partition; 41 second protrusion; 5 upper support; 6 top cover; 61 groove; 7 connecting member; 80 filler; 81 first cell; 82 second cell; 9 end cover.

### Detailed description of the embodiments

### Embodiment 1

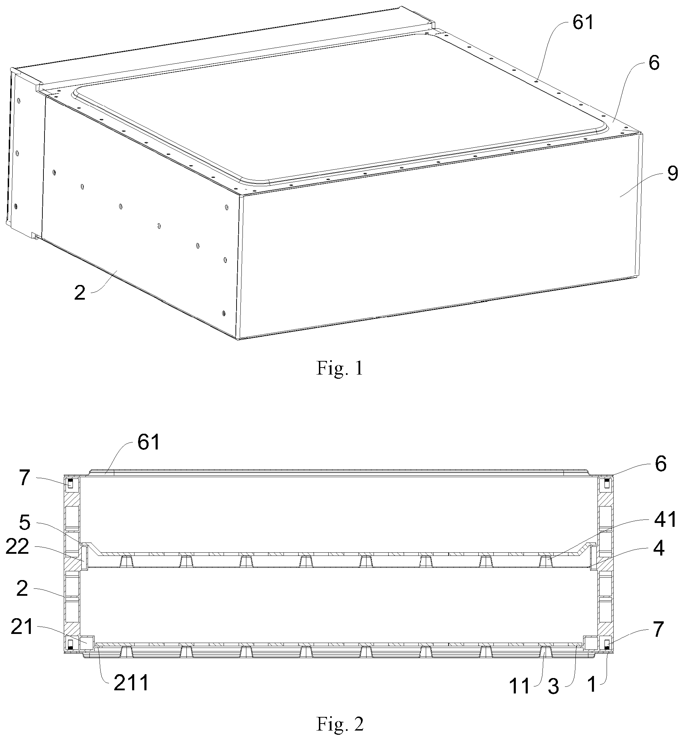

Referring to Figs. 1-2, provided is a battery box, including a bottom plate 1, lateral plates 2, a lower support 3, a partition 4, and an upper support 5.

A top surface of the bottom plate 1 is provided with a first protrusion 11. The lateral plates 2 are provided perpendicular to the bottom plate 1 on two opposite edges of the bottom plate 1, an interior side of the lateral plate 2 is arranged with a first snap-block 21 and a second snap-block 22 along an extension direction thereof, that is, an interior side of the lateral plate 2 is arranged with the first snap-block 21 and the second snap-block 22 along a direction perpendicular to the bottom plate 1, and the first snap-block 21 is closer to the bottom plate 1 than the second snap-block 22. Two opposite ends of the lower support 3 are provided on the first snap-block 21 respectively, a bottom of the lower support 3 is abutted against a first protrusion 11, the first protrusion 11 serves to support the lower support 3, so that the lower support 3 is placed on a plane where an upper surface of the first protrusion 11 is positioned, and a top of the lower support 3 is arranged for placing cells. Two opposite ends of the partition 4 are fixedly connected to the second snap-block 22 respectively, a top of the partition 4 is provided with a second protrusion 41, and the second protrusion 41 serves to support the partition 4, so that the partition 4 is placed on a plane where an upper surface of the second protrusion 41. Two opposite ends of the upper support 5 are provided on the second snap-block 22 respectively, a bottom of the upper support 5 is abutted against the second protrusion 41, and a top of the upper support 5 is arranged for placing cells.

With the above configurations, a double-deck structure is formed to achieve an arrangement of double deck of cells, which greatly improves the space utilization inside the battery pack, enhances the structural strength of the double-deck structure, and ensures the stability of the arrangement of the double deck of cells.

In some implementations, the battery box further includes a top cover 6.

The top cover 6 is detachably connected to a top end of the lateral plate 2 and is perpendicular to the lateral plate 2. In some implementations, a bottom of the top cover 6 is concavely formed with a groove 61 in a direction distal to the upper support 5. In some implementations, a top of the lateral plate 2 is provided with first holes, edges of the top cover 6 are provided with connecting holes, and connecting members 7 are threaded through the first holes and the connecting holes, so that the top cover 6 is detachably connected to a top end of the lateral plate 2, in which the first holes and the connecting holes may be provided as screw holes, and accordingly, the connecting members 7 may be provided as screws.

By providing the top cover 6 detachably connected to the lateral plate 2, the battery inside the box is shielded and protected, and it is also easy to perform maintenance inside the box, so that the top cover 6 may be removed when the cells need to be replaced, thereby replacing the cells inside the box, and the top cover 6 may be mounted back again after the replacement.

Specifically, a top is a side facing upward in normal use, and a bottom is a side facing downward opposite to the top surface; accordingly, a top end is an end facing upward in normal use, and a bottom end is an end facing downward opposite to the top end.

More specifically, the lateral plates 2 are provided in a hollowed-out configuration. On the one hand, an overall weight of the lateral plate 2 is decreased 2, and on the other hand, the reinforcement ribs formed by the internal hollow out support the inner and outer sides of the lateral plates 2 respectively, so that the overall strength of the lateral plates 2 is strengthened. Optionally, a side of the first snap-block 21 is extended in a direction toward the lower support 3 to form a tab 211, that is, a side of the first snap-block 21 is extended inwardly to form a tab 211, and two opposite ends of the lower support 3 are provided on a top of the tab 211 respectively, so that the lower support 3 may be connected to the first snap-block 21 through a simpler and stabler structure.

In some implementations, bottom ends of the lateral plates 2 are detachably connected to two opposite edges of the bottom plate 1. In some implementations, a bottom end of the lateral plate 2 is provided with second holes, two opposite edges of the bottom plate 1 is provided with mounting holes, and connecting members 7 are threaded through the second holes and the mounting holes, so that the a bottom end of the lateral plate 2 is detachably connected to two opposite edges of the bottom plate 1, in which the second holes and the mounting holes may be provided as screw holes, and accordingly, the connecting members 7 may be provided as screws.

The lateral plates 2 and the bottom plate 1 form a detachable connection by means of the connecting member 7, which facilitates the disassembly of the lateral plates 2 for the maintenance of the lateral plates 2 themselves and the cells inside the box.

In some implementations, two other opposite edges of the bottom plate 1 may be provided with end plates, which form a space inside the box together with the lateral plate 2, for accommodating the cells and for protecting the cells inside the box.

### Embodiment 2

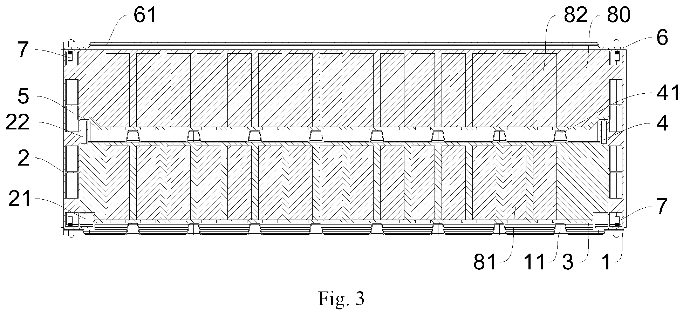

Referring to Fig. 3, based on the same concept, disclosed is further a battery pack, including a battery box as mentioned above, one or more first cells 81, and one or more second cells 82.

The first cell 81 is provided on a top of the lower support 3, the second cell 82 is provided on a top of the upper support 5, so as to form an arrangement of double deck of cells and improves the space utilization inside the battery pack.

In practical applications, the lower support 3 and the lateral plates 2 are enclosed to form a first filling space for filling a filler 80, so that the first cell 81 is fixedly provided on a top of the lower support 3; and/or, the upper support 5 and the lateral plates 2 are enclosed to form a second filling space for filling a filler 80, so that the second cell 81 is fixedly provided on a top of the upper support 3. The filler may be provided as polyurethane foam sealing agent, which facilitates filling the gap between each of the first batteries 81, the space between the first battery 81 and the lateral plate 2 and the partition 4, the gap between each of the second batteries 82, and the space between the second batteries 82 and the lateral plate 2.

## Claims

1. A battery box, comprising:
a bottom plate (1), wherein a top surface of the bottom plate (1) is provided with a first protrusion (11);
lateral plates (2), wherein the lateral plates are provided perpendicular to the bottom plate (1) on two opposite edges of the bottom plate (1), an interior side of the lateral plate (2) is arranged with a first snap-block (21) and a second snap-block (22) along an extension direction thereof, and the first snap-block (21) is closer to the bottom plate (1) than the second snap-block (22);
a lower support (3), wherein two opposite ends of the lower support (3) are provided on the first snap-block (21) respectively, a bottom of the lower support (3) is abutted against a first protrusion (11), and a top of the lower support (3) is arranged for placing cells;
a partition (4), wherein two opposite ends of the partition (4) are fixedly connected to the second snap-block (22) respectively, and a top of the partition (4) is provided with a second protrusion (41); and
an upper support (5), wherein two opposite ends of the upper support (5) are provided on the second snap-block (22) respectively, a bottom of the upper support (5) is abutted against the second protrusion (41), and a top of the upper support (5) is arranged for placing cells.

2. The battery box according to claim 1, further comprising:
a top cover (6), wherein the top cover is detachably connected to a top of the lateral plate (2) and is perpendicular to the lateral plate (2).

3. The battery box according to claim 2, wherein a bottom of the top cover (6) is concavely formed with a groove (61) in a direction distal to the upper support (5).

4. The battery box according to claim 2, wherein a top end of the lateral plate (2) is provided with first holes, edges of the top cover (6) are provided with connecting holes, and connecting members (7) are threaded through the first holes and the connecting holes, so that the top cover (6) is detachably connected to a top end of the lateral plate (2).

5. The battery box according to any one of claims 1-4, wherein the lateral plates (2) are provided in a hollowed-out configuration.

6. The battery box according to any one of claims 1-4, wherein a side of the first snap-block (21) is extended in a direction toward the lower support (3) to form a tab (211), and two opposite ends of the lower support (3) are provided on a top of the tab (211) respectively.

7. The battery box according to any one of claims 1-4, wherein bottom ends of the lateral plates (2) are detachably connected to two opposite edges of the bottom plate (1).

8. The battery box according to claim 7, wherein a bottom end of the lateral plate (2) is provided with second holes, two opposite edges of the bottom plate (1) is provided with mounting holes, and connecting members (7) are threaded through the second holes and the mounting holes, so that the a bottom end of the lateral plate (2) is detachably connected to two opposite edges of the bottom plate (1).

9. A battery pack, comprising:
a battery box as claimed in any one of claims 1-8;
one or more first cells (81), wherein the first cell (81) is provided on a top surface of the lower support (3); and
one or more second cells (82), wherein the second cell (82) is provided on a top surface of the upper support (3).

10. The battery pack according to claim 9, wherein the lower support (3) and the lateral plates (2) are enclosed to form a first filling space for filling a filler (80), so that the first cell (81) is fixedly provided on a top of the lower support (3); and/or, the upper support (5) and the lateral plates (2) are enclosed to form a second filling space for filling a filler (80), so that the second cell (81) is fixedly provided on a top of the upper support (3).

## Patentansprüche

1. Batteriekasten, umfassend:
eine Bodenplatte (1), worin eine obere Fläche der Bodenplatte (1) mit einem ersten Vorsprung (11) versehen ist;
seitliche Platten (2), worin die seitlichen Platten senkrecht zur Bodenplatte (1) an zwei entgegengesetzten Rändern der Bodenplatte (1) vorgesehen sind, eine innere Seite der seitlichen Platte (2) mit einem ersten Schnappblock (21) und einem zweiten Schnappblock (22) entlang einer Erstreckungsrichtung davon angeordnet ist, und der erste Schnappblock (21) der Bodenplatte (1) näher liegt als der zweite Schnappblock (22);
eine untere Abstützung (3), worin zwei entgegengesetzte Enden der unteren Abstützung (3) jeweils am ersten Schnappblock (21) vorgesehen sind, ein Unterteil der unteren Abstützung (3) gegen einen ersten Vorsprung (11) anliegt, und ein Oberteil der unteren Abstützung (3) zum Einbringen von Zellen eingerichtet ist;
eine Trennung (4), worin zwei entgegengesetzte Enden der Trennung (4) jeweils mit dem zweiten Schnappblock (22) fest verbunden sind, und ein Oberteil der Trennung (4) mit einem zweiten Vorsprung (41) versehen ist; und
eine obere Abstützung (5), worin zwei entgegengesetzte Enden der oberen Abstützung (5) jeweils am zweiten Schnappblock (22) vorgesehen sind, ein Unterteil der oberen Abstützung (5) gegen den zweiten Vorsprung (41) anliegt, und ein Oberteil der oberen Abstützung (5) zum Einbringen von Zellen eingerichtet ist.

2. Batteriekasten nach Anspruch 1, ferner umfassend:
eine obere Abdeckung (6), worin die obere Abdeckung mit einem Oberteil der seitlichen Platte (2) abnehmbar verbunden ist und zur seitlichen Platte (2) senkrecht ist.

3. Batteriekasten nach Anspruch 2, worin ein Unterteil der oberen Abdeckung (6) konkav mit einer Nut (61) in einer zur oberen Abstützung (5) distalen Richtung ausgestaltet ist.

4. Batteriekasten nach Anspruch 2, worin ein oberes Ende der seitlichen Platte (2) mit ersten Löchern versehen ist, Ränder der oberen Abdeckung (6) mit Verbindungslöchern versehen sind, und Verbindungselemente (7) durch die ersten Löcher und die Verbindungslöcher eingefädelt sind, so dass die obere Abdeckung (6) mit einem oberen Ende der seitlichen Platte (2) abnehmbar verbunden ist.

5. Batteriekasten nach einem der Ansprüche 1-4, worin die seitlichen Platten (2) in einer ausgehöhlten Ausgestaltung vorgesehen sind.

6. Batteriekasten nach einem der Ansprüche 1-4, worin eine Seite des ersten Schnappblocks (21) in einer Richtung zur unteren Abstützung (3) hin ausgedehnt ist, um eine Lasche (211) zu bilden, und zwei entgegengesetzte Enden der unteren Abstützung (3) jeweils an einem Oberteil der Lasche (211) vorgesehen sind.

7. Batteriekasten nach einem der Ansprüche 1-4, worin untere Enden der seitlichen Platten (2) mit zwei entgegengesetzten Rändern der Bodenplatte (1) abnehmbar verbunden sind.

8. Batteriekasten nach Anspruch 7, worin ein unteres Ende der seitlichen Platte (2) mit zweiten Löchern versehen ist, zwei entgegengesetzte Ränder der Bodenplatte (1) mit Montagelöchern versehen sind, und Verbindungselemente (7) durch die zweiten Löcher und die Montagelöcher eingefädelt sind, so dass das untere Ende der seitlichen Platte (2) mit zwei entgegengesetzten Rändern der Bodenplatte (1) abnehmbar verbunden ist.

9. Batteriepack, umfassend:
einen Batteriekasten nach einem der Ansprüche 1-8;
eine oder mehrere erste Zellen (81), worin die erste Zelle (81) an einer oberen Fläche der unteren Abstützung (3) vorgesehen ist; und
eine oder mehrere zweite Zellen (82), worin die zweite Zelle (82) an einer oberen Fläche der oberen Abstützung (3) vorgesehen ist.

10. Batteriepack nach Anspruch 9, worin die untere Abstützung (3) und die seitlichen Platten (2) umschlossen sind, um einen ersten Füllraum zum Füllen einer Füllmasse (80) zu bilden, so dass die erste Zelle (81) an einem Oberteil der unteren Abstützung (3) fest vorgesehen ist; und/oder, die obere Abstützung (5) und die seitlichen Platten (2) umschlossen sind, um einen zweiten Füllraum zum Füllen einer Füllmasse (80) zu bilden, so dass die zweite Zelle (81) an einem Oberteil der oberen Abstützung (3) fest vorgesehen ist.

## Revendications

1. Boîtier de batterie, comprenant :
une plaque de fond (1), dans lequel une surface supérieure de la plaque de fond (1) est dotée d'une première saillie (11) ;
des plaques latérales (2), dans lequel les plaques latérales sont disposées perpendiculairement à la plaque de fond (1) sur deux bords opposés de la plaque de fond (1), un côté intérieur de la plaque latérale (2) est équipé d'un premier bloc encliquetable (21) et d'un second bloc encliquetable (22) le long d'une direction d'extension de celui-ci, et le premier bloc encliquetable (21) est plus proche de la plaque de fond (1) que ne l'est le second bloc encliquetable (22) ;
un support inférieur (3), dans lequel deux extrémités opposées du support inférieur (3) sont disposées sur le premier bloc encliquetable (21) respectivement, un fond du support inférieur (3) est en butée contre une première saillie (11), et une partie supérieure du support inférieur (3) est conçue pour placer des éléments ;
une cloison (4), dans lequel deux extrémités opposées de la cloison (4) sont reliées à demeure au second bloc encliquetable (22) respectivement, et une partie supérieure de la cloison (4) est dotée d'une seconde saillie (41) ; et
un support supérieur (5), dans lequel deux extrémités opposées du support supérieur (5) sont disposées sur le second bloc encliquetable (22) respectivement, un fond du support supérieur (5) est en butée contre la seconde saillie (41), et une partie supérieure du support supérieur (5) est conçue pour placer des éléments.

2. Boîtier de batterie selon la revendication 1, comprenant en outre :
un couvercle supérieur (6), dans lequel le couvercle supérieur est relié de manière détachable à une partie supérieure de la plaque latérale (2) et est perpendiculaire à la plaque latérale (2).

3. Boîtier de batterie selon la revendication 2, dans lequel un fond du couvercle supérieur (6) est formé de manière concave avec une rainure (61) dans une direction distale par rapport au support supérieur (5).

4. Boîtier de batterie selon la revendication 2, dans lequel une extrémité supérieure de la plaque latérale (2) est dotée de premiers trous, des bords du couvercle supérieur (6) sont dotés de trous de liaison, et des organes de liaison (7) sont filetés à travers les premiers trous et les trous de liaison, de sorte que le couvercle supérieur (6) soit relié de manière détachable à une extrémité supérieure de la plaque latérale (2).

5. Boîtier de batterie selon l'une quelconque des revendications 1-4, dans lequel les plaques latérales (2) sont disposées dans une configuration évidée.

6. Boîtier de batterie selon l'une quelconque des revendications 1-4, dans lequel un côté du premier bloc encliquetable (21) s'étend dans une direction vers le support inférieur (3) pour former une languette (211), et deux extrémités opposées du support inférieur (3) sont disposées sur une partie supérieure de la languette (211) respectivement.

7. Boîtier de batterie selon l'une quelconque des revendications 1-4, dans lequel les extrémités inférieures des plaques latérales (2) sont reliées de manière détachable à deux bords opposés de la plaque de fond (1).

8. Boîtier de batterie selon la revendication 7, dans lequel une extrémité inférieure de la plaque latérale (2) est dotée de seconds trous, deux bords opposés de la plaque de fond (1) sont dotés de trous de montage, et des organes de liaison (7) sont filetés à travers les seconds trous et les trous de montage, de sorte que l'extrémité inférieure de la plaque latérale (2) soit reliée de manière détachable à deux bords opposés de la plaque de fond (1).

9. Bloc-batterie, comprenant :
un boîtier de batterie selon l'une quelconque des revendications 1-8 ;
un ou plusieurs premiers éléments (81), dans lequel le premier élément (81) est disposé sur une surface supérieure du support inférieur (3) ; et
un ou plusieurs seconds éléments (82), dans lequel le second élément (82) est disposé sur une surface supérieure du support supérieur (3).

10. Bloc-batterie selon la revendication 9, dans lequel le support inférieur (3) et les plaques latérales (2) sont joints pour former un premier espace de remplissage à remplir d'une charge (80), de sorte que le premier élément (81) soit disposé à demeure sur une partie supérieure du support inférieur (3) ; et/ou, le support supérieur (5) et les plaques latérales (2) sont joints pour former un second espace de remplissage à remplir d'une charge (80), de sorte que le second élément (81) soit disposé à demeure sur une partie supérieure du support supérieur (3).
